## Europäisches Patentamt

## European Patent Office

## Office européen des brevets

(11) Veröffentlichungsnummer: **0 106 971**
**B1**

(12) ## EUROPÄISCHE PATENTSCHRIFT

(45) Veröffentlichungstag der Patentschrift:
08.04.87

(51) Int. Cl.⁴: **G 01 F 11/28,** B 67 C 3/20

(21) Anmeldenummer: **83108267.2**

(22) Anmeldetag: **23.08.83**

(54) **Vorrichtung zum volumetrischen Messen von Flüssigkeiten insb. Milch.**

(30) Priorität: **24.09.82 DE 3235405**

(43) Veröffentlichungstag der Anmeldung:
**02.05.84 Patentblatt 84/18**

(45) Bekanntmachung des Hinweises auf die Patenterteilung:
**08.04.87 Patentblatt 87/15**

(84) Benannte Vertragsstaaten:
**AT CH GB LI NL**

(56) Entgegenhaltungen:
**CH-A-454 652**
**DE-A-1 657 184**
**DE-A-2 123 865**
**DE-A-2 757 896**
**DE-A-3 121 078**
**DE-B-1 932 465**
**FR-A-2 353 046**
**GB-A-1 466 472**
**US-A-915 364**
**US-A-2 692 111**
**US-A-3 971 494**

(73) Patentinhaber: **Bremerland- Molkerei eG,
Admiralstrasse 54, D-2800 Bremen 1 (DE)**

(72) Erfinder: **Zimmer, Albert, Ing. grad., Parkallee 46,
D-2800 Bremen 1 (DE)**

(74) Vertreter: **Goddar, Heinz J., Dr., FORRESTER &
BOEHMERT Widenmayerstrasse 4/I, D-8000
München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung geht aus von einer Vorrichtung zum volumetrischen Messen von Flüssigkeiten, insbesondere von Milch, gemäß der im Oberbegriff des Patentanspruches 1 angegebenen Art. Derartige Meßvorrichtungen finden u.a. bei Milchabgabestationen Verwendung, bei denen die Milch nach der durch Abmessen erfolgten Dosierung im Meßgefäß in eine unmittelbar unter dem Meßgefäß deponierte Verbraucherflasche abgefüllt wird. Eine derartige Vorrichtung ist aus der DE-A1-3 121 078 bekannt.

Die Erfindungsaufgabe besteht nun darin, ausgehend von der zuvor erwähnten Druckschrift, eine aus Meßgefäß und Flaschen-Zelle bestehende sicher bedienbare Abfülleinheit zu schaffen, deren Aufbau einfach und kleinbauend gestaltet ist, deren Meßgenauigkeit verbessert und in der die Milch schonend behandelt sowie die für den Meß- und Abfüllvorgang schädliche Schaumbildung weitgehend unterdrückt wird. Ferner soll durch Maßnahmen an der Flaschenzelle verhindert werden, daß andere als die vorgeschriebenen Flaschen zum Einsatz kommen und daß sich der Abfüllvorgang nur bei Einbringung einer leeren vorgeschriebenen Flasche starten läßt.

Gemäß der Erfindung wird diese Aufgabe durch die im kennzeichnenden Teil des Patentanspruches 1 zum Ausdruck kommenden Merkmale gelöst. Weitere Ausgestaltungen der Erfindung ergeben sich aus den abhängigen Ansprüchen.

Die gleichzeitige Ausbildung der im Gefäßboden vorgesehenen Ein- und Austrittsöffnungen als Ventilsitze, die in Verbindung mit druckluftbetätigten Absperrorganen Ventile bilden, ermöglichen gegenüber den bekannten Ausführungen (z. B. DE-A1-3 121 078) eine besonders niedrige Bauhöhe, da die Ventilbetätigungs-Mechanismen das Meßgefäß seitlich durchdringen können. Diese Ventilanordnung hat den weiteren Vorteil, daß der Deckel des Meßgefäßes kegelförmig ausgebildet werden kann, wodurch für den Füllungsfühler ein zentralgelegener höchster Unterbringungsplatz geschaffen wird, was zu einer Verbesserung in der Abführung evtl. auftretender Luftblasen und damit zu einer höheren Meßgenauigkeit führt.

Eine weitere Vereinfachung im Aufbau der Abfülleinheit ergibt sich noch dadurch, daß das Führungsrohr des als Schwimmer ausgebildeten Füllungsfühlers gleichzeitig als Entlüftungsleitung beim Füllen des Meßgefäßes und als Druckluft-Zuführungsleitung beim Entleeren des aufgefüllten Meßgefäßes dient, wobei ein dem Füllungsfühler nachgeordnetes Umschaltventil die Leitung entweder mit der Atmosphäre oder mit der Druckluftleitung verbindet. Die Umschaltung wird durch den Füllungsfühler über die Steuereinrichtung bewirkt. Die gleichzeitige Verwendung des Führungsrohres für den Schwimmer als Entlüftungsleitung und als Druckluft-Zuführungsleitung sowie die Zusammenfassung dieser Teile mit einem Umschaltventil zu einer Baueinheit, wirkt sich nicht nur raumsparend aus, sondern trägt auch erheblich zur Verbilligung der Herstellungskosten bei.

Um der Schaumbildung bei Öffnung des Auslaßventils im Meßgefäß bei der Milchausgabe zu begegnen und um ein Überschäumen der Verbraucherflasche und damit ein Verschmutzen der Flaschenzelle zu verhindern, ist der Auslaßstutzen zu einer sich kegelförmig erweiternden Mündungszone ausgebildet, in welcher sich zentral ein kegelförmig ausgebildeter Kern befindet, der zwischen sich und der Kegelwandung des Stutzens Durchlaßschlitze frei läßt, durch welche die Milch ausströmt. Diese Durchlaßschlitze bzw. Auslaßschlitze 22 verengen sich in einem Kegelachsschnitt gesehen in Strömungsrichtung derart, daß ihre Durchlaßquerschnitte über ihre gesamte Länge gleichbleiben. Dies führt zu einer laminaren ringförmigen Strömung, die blasenfrei in die Verbraucherflasche einmündet.

Ein weiterer Vorteil der Abfülleinheit besteht darin, daß die Flaschenzelle vor dem Beginn des Füllens bezüglich ihrer vorgeschriebenen Form und Größe und bezüglich ihres Leerzustandes abgetastet wird. Die Zelle nimmt hierbei zwei verriegelbare Positionen ein. In der Leerposition ist die Zelle gegen jede Bewegung und auch gegen das Starten der Abfülleinheit verriegelt. Nach der Einbringung der leeren vorgeschriebenen Flasche wird die Verriegelung aufgehoben, so daß sich die Zelle durch Verdrehen derart verschließen läßt, daß ein die Flasche umgebendes Mantelteil diese gegen äußeren Zugriff vollkommen abdeckt. In dieser verschlossenen Position ist die Flaschenzelle wieder verriegelt, und erst in dieser Position wird der Start zur Entleerung des Meßgefäßes automatisch gegeben.

Weitere Vorteile sind in der folgenden Beschreibung in Verbindung mit der beiliegenden Zeichnung zu ersehen.

In der Zeichnung ist eine erfindungsgemäß ausgebildete Vorrichtung dargestellt. Es zeigen:

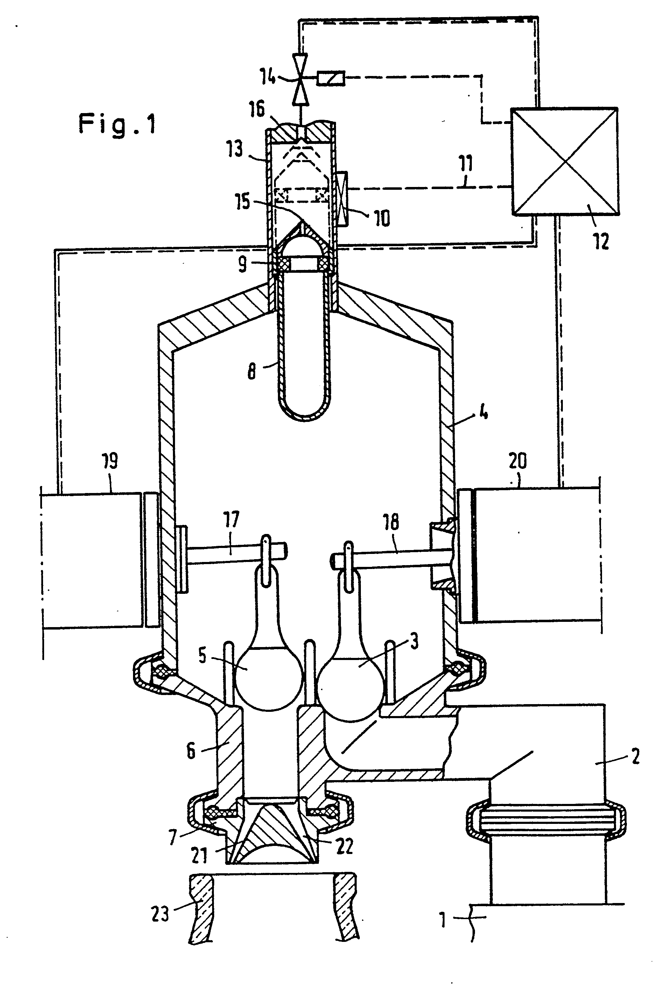

Fig.1 ein an einem Vorratsbehälter angeschlossenes Meßgefäß im Schnitt,

Fig. 2 eine unterhalb des Meßgefäßes angeordnete Flaschenzelle,

Fig. 3 eine Draufsicht auf die Flaschenzelle,

Fig. 4 einen Längsschnitt durch das Drehteil der Flaschenzelle

Fig. 5 einen Schnitt nach der Linie V - V der Fig. 4.

Mit 1 ist ein Vorratsbehälter z.B. zum Abfüllen von Frischmilch bezeichnet, aus dem die Flüssigkeit über eine Leitung 2 und einem druckluftgesteuerten Einlaßventil 3 in ein Meßgefäß 4 strömt. Nach Auffüllung des Meßgefäßes 4 und der damit erfolgten Dosierung, strömt die Milch über ein druckluftgesteuertes Auslaßventil 5 durch eine Leitung 6 und einen Auslaßstutzen 7 direkt in die Verbraucherflasche.

Das für die Aufnahme einer bestimmten Milchmenge geeichte Meßgefäß 4, das vorzugsweise einen oder zwei Liter aufnimmt, besitzt einen als Schwimmer ausgebildeten Füllungsfühler 8, der einen eingelassenen Permanentmagneten 9 trägt, welcher bei gefülltem Meßgefäß 4 mit einem Sensor 10 (z.B. Reedkontakt) korrespondiert, der den gefüllten Zustand über eine Leitung 11 meldet, die das erhaltene Signal als Schließimpuls an das Auslaßventil 5 weitergibt.

An der Oberseite befindet sich ferner eine Entlüftungsleitung 13, die beim Füllen des Meßgefäßes 4 geöffnet und beim Ablassen durch ein Magnetventil 14 absperrbar ist. Die Entlüftungsleitung 13 dient ferner für den Entleerungsvorgang zur Zuführung von Druckluft. Der Schwimmer 8 ist in der Entlüftungsleitung 13 mit ausreichendem Spiel untergebracht, so daß die Luft zwischen Teil 13 und Schwimmer aus dem Meßgefäß entweichen kann.

Die dem Meßgefäß 4 abgekehrte Seite des Schwimmers ist gleichzeitig als Verschlußteil 15 ausgebildet, das mit einem in der Entlüftungsleitung 13 sitzenden Ventilsitz 16 korrespondiert. Diese Maßnahme gestattet ein Absperren der Entlüftungsleitung und verhindert ein Austreten der Milch an dieser Stelle auch dann, wenn im elektrischen System ein Defekt auftritt.

Die Verschlußteile der Ein- und Auslaßventile (3, 5) sind mit den Betätigungsarmen 17 und 18 gelenkig und lösbar verbunden und werden durch druckluftbeaufschlagte Armaturen 19 und 20 betätigt.

Der Auslaßstutzen 7 ist als ein lösbares Teil an der Entleerungsleitung 6 befestigt. Er erweitert sich zur Mündung hin kegelförmig und besitzt einen durch Verbindungsstege zentral befestigten kegeligen Kern 21, zwischen dessen Außenwandung und der Innenwandung des Stutzens 7 Auslaßschlitze 22 verbleiben. Zur Vermeidung von Schaumbildung verengen sich die Schlitze 22 in einem Kegelachsschnitt gesehen in Strömungsrichtung so, daß ihre Durchlagsquerschnitte über die gesamte Länge gleich bleiben. Hierdurch wird ein ungestörtes laminares Ausströmen der Milch erzielt.

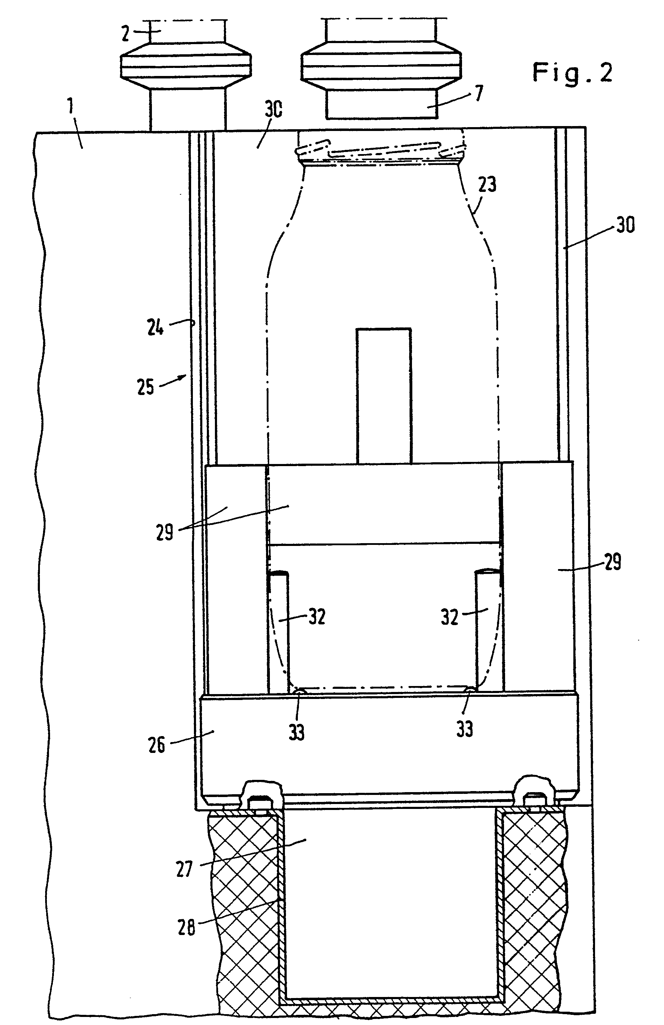

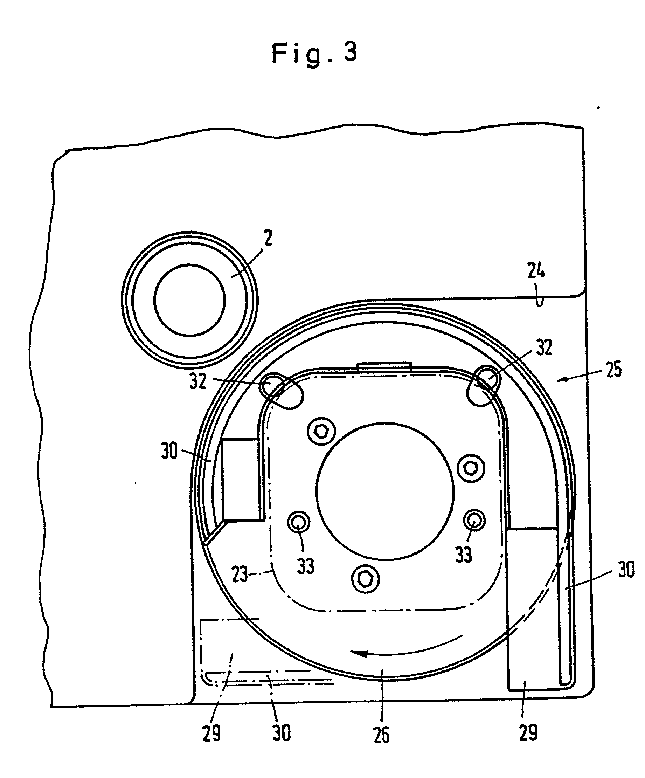

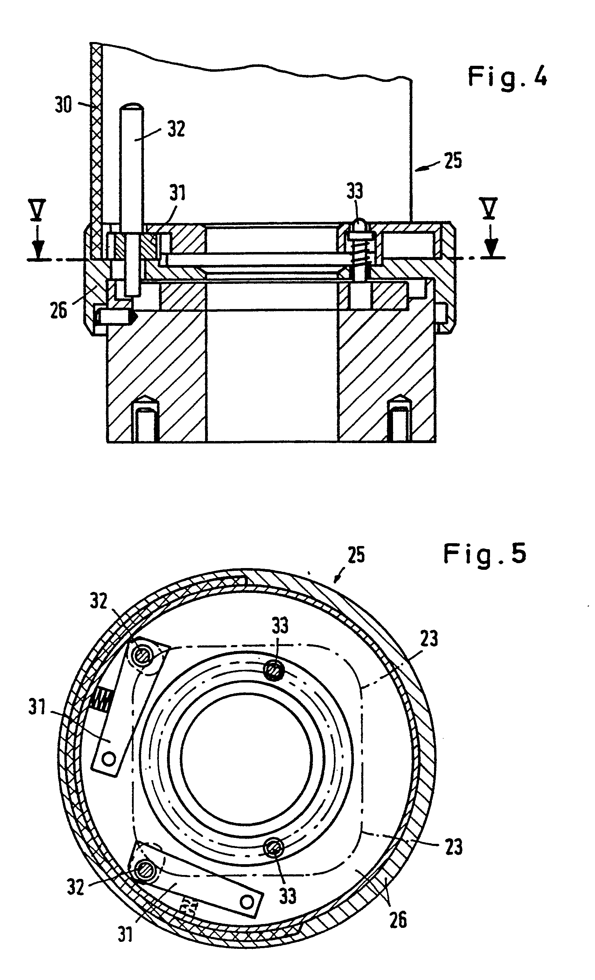

Für die Verbraucherflasche 23 ist in einer Ausnehmung 24 am Vorratsbehälter 1 eine verschließbare Flaschenzelle 25 vorgesehen, in welche die Flasche 23 für den Abfüllvorgang gestellt werden muß (Fig. 2-4). Die Flaschenzelle besteht aus einem Drehteil 26, das mit einem Zapfen 27 in einer Öffnung 28 des Vorratsbehälters drehbeweglich geführt ist. Das Drehteil ist mit einem die Flasche horizontal einfassenden Bügel 29 versehen, der seinerseits ein zylindrisches die Flaschenzelle im Abfüllzustand nach außen hinvöllig völlig abkapselndes Mantelteil 30 trägt. Das Mantelteil kann zweckmäßigerweise zur Beobachtung des Füllvorganges aus durchsichtigem Material z.B. Kunstglas bestehen.

Zur Sicherung, daß nur die zum Abfüllen der Milch zugelassenen Verbraucherflaschen verwendet werden können, ist der Bügel 29 der Flaschenform genau angepaßt. Im Drehteil 26 befindet sich ferner ein Verriegelungsmechanismus 31, der mit die seitliche Flaschenkontur abfühlenden Stiften 32 in den Zellenraum hineinragt. Die Flaschenzelle ist im unbesetzten Zustand in der Offenposition verriegelt. Desgleichen bleibt die Flaschenzelle verriegelt, wenn nicht die vorgeschriebene Flasche in die Zelle eingebracht wird.

In den Verriegelungsmechanismus greifen ferner zwei aus dem Boden des Drehteiles 26 herausragende Zapfen 33 ein, die das Flaschengewicht prüfen und bei Einbringung einer nicht ganz leeren Flasche die Zelle ebenfalls verriegeln. Erst dann, wenn die vorgeschriebene Flasche leer eingeführt wird, gibt der mechanisch wirkende Verriegelungsmechanismus die Zelle zum Verschließen durch Drehen des Drehteiles 26 frei. Über am Drehteil vorgesehene elektrische Fühler wird der Zustand der Zelle an die Steuereinrichtung 12 signalisiert und die Abgabe der Milch freigegeben.

Selbstverständlich läßt sich der Anmeldungsgegenstand auch zum Abfüllen anderer Flüssigkeiten als Milch verwenden. Die Gesamtanlage wird vorzugsweise mit Druckluft betrieben, d.h., daß die Milch mit Druckluft aus dem Vorratsbehälter in das Meßgefäß und aus dem Meßgefäß in die Verbraucherflasche gedrückt wird.

**Patentansprüche**

1. Vorrichtung zum volumetrischen Messen von Flüssigkeiten, insbesondere Milch, bestehend aus einem Meßgefäß (4) mit einer Flüssigkeitseintrittsöffnung (3), einer am Gefäßboden angeordneten Flüssigkeitsaustrittsöffnung (3, 5), mit einem Füllungsfühler (8), einer elektrischen Steuereinrichtung (9, 10, 11), die über Ventile (3, 5) den Zu- und Abfluß der zu dosierenden Flüssigkeitsmenge regelt, einer Schwimmeranordnung (8) und einer Entlüftung (13), durch die beim Füllen Luft aus dem Meßgefäß (4) austreten kann und die durch die als Füllungsfühler (8) dienende Schwimmeranordnung (8) verschließbar ist, wobei beim Füllen die Luft im Meßgefäß (4) über eine Entlüftungsleitung (13) ins Freie tritt, dadurch gekennzeichnet,

a) daß sowohl die Ein- als auch die Austrittsöffnung im Gefäßboden angeordnet und durch unabhängig betätigbare Ventile (3, 5) absperrbar sind, die durch Druckluftarmaturen (19, 20) betätigbar sind,

b) daß unterhalb des Auslaßventils (5) ein Auslaßstutzen (7) vorgesehen ist, der sich zur Mündung hin kegelförmig erweitert und in dem ein kegeliger Kern (21) so ausgebildet und mittels Verbindungsstegen so befestigt ist, daß zwischen der Außenwandung des Kerns und der Innenwandung des Stutzens (7) Schlitze (22) gebildet werden, wobei sich die Schlitze in einem Kegelachsschnitt gesehen in Strömungsrichtung so verengen, daß ihre Durchlaßquerschnitte über ihre gesamte Länge gleichbleibend sind, und

c) daß eine Entlüftungsleitung (13) mit einem darin frei beweglich vorgesehenen Schwimmersensor (8) sowie einem in die Leitung eingeschalteten Absperrventil (14) zu einem Bauteil zusammengefaßt sind.

2. Vorrichtung nach Anspruch 1, dadurch gekennzeichnet, daß für die Aufnahme der Verbraucherflasche (23) eine verriegelbare Flaschenzelle (26, 29, 30) vorgesehen ist.

3. Vorrichtung nach Anspruch 1 oder 2, dadurch gekennzeichnet, daß ein Mantelteil (30) vorgesehen ist, durch das die Flaschenzelle (26, 29, 30) während des Abfüllvorganges nach außen hin vollkommen abgeschlossen ist.

4. Vorrichtung nach einem der Ansprüche 1 bis 3, dadurch gekennzeichnet, daß die Flaschenzelle (26, 29, 30) einen Verriegelungsmechanismus (31) aufweist, der die Zelle nur dann zum Abfüllen freigibt, wenn eine vorgeschriebene leere Flasche eingeführt wurde.

## Claims

1. Apparatus for the volumetric measurement of liquids, more particularly milk, consisting of a measuring vessel (4) having a liquid inlet aperture (3), a liquid outlet aperture (5) at the base of the vessel, a filling sensor (8), an electrical control means (9, 10, 11) which by way of valves (3, 5) controls the inflow and outflow of the amount of liquid for dispensing, a float device (8) and a venting means (13) through which air can escape from the measuring vessel (4) during filling and which is closable by the float device (8) acting as the the filling sensor (8), the air in the measuring vessel (4) escaping to atmosphere via a venting conduit (13) during filling, characterised in that

(a) Both the inlet and outlet apertures are disposed in the base of the vessel and are closable by independently operable valves (3, 5) adapted to be actuated by compressed-air fittings (19, 20),

(b) An outlet spigot (7) is disposed beneath the outlet valve (5) and flares out conically towards the mouth and has a conical core (21) so constructed and so secured therein by connecting webs as to form slots (22) between the outer wall of the core and the inner wall of the spigot (7), the slots so narrowing in the direction of flow, as considered in a conical axial section, that their passage cross-sections are constant over their entire length, and

(c) A venting conduit (13) having a float sensor (8) freely movable therein, and a shut-off valve (14) disposed in the conduit are combined to form a unit.

2. Apparatus according to claim 1, characterised in that a lockable bottle cell (26, 29, 30) is provided to receive the consumer bottle (23).

3. Apparatus according to claim 1 or 2, characterised in that a jacket part (30) is provided by means of which the bottle cell (26, 29, 30) is completely sealed off from the exterior during the filling operation.

4. Apparatus according to any one of claims 1 to 3, characterised in that the bottle cell (26, 29, 30) has a locking mechanism (31) which does not release the cell for the filling operation until a regulation empty bottle has been introduced.

## Revendications

1. Appareil pour la mesure volumétrique de liquides, en particulier de lait, comprenant un récipient de mesure (4) muni d'un orifice d'entrée de liquide (3), d'un orifice de sortie de liquide (5) situé au fond du récipient, d'un palpeur de remplissage (8), un moyen de commande électrique (9, 10, 11) qui règle, par l'intermédiaire de soupapes (3, 5) l'entrée et la sortie du liquide à doser, un système de flotteur (8) et une purge d'air (13) par laquelle l'air peut s'échapper du récipient de mesure (4) lors du remplissage et qui est obturable par le système de flotteur (8) servant de palpeur de remplissage (8), l'air dans le récipient de mesure (4) s'échappant à l'atmosphère libre, pendant le remplissage par une conduite de purge (13) caractérisé par le fait que

a) aussi bien l'orifice d'entrée que l'orifice de sortie sont ménagés au fond du récipient et sont obturables par des soupapes (3, 5) actionnables de façon indépendante par des robinetteries à air comprimé

b) sous la soupape de sortie (5) est prévu un raccord de sortie (7) qui s'élargit pour déboucher en forme de cône et dans lequel un noyau conique (21) est disposé et fixé par des entretoises de manière qu'entre la paroi extérieure du noyau et la paroi intérieure du raccord (7) soient formées des rainures (22), ces rainures, vues en coupe par l'axe du cône, allant en se rétrécissant en direction du courant de telle sorte que leur section de passage soit constante sur toute leur longueur, et

c) une conduite de purge d'air (13), un palpeur à flotteur (8) mobile librement dans cette conduite et une soupape d'arrêt (14) intercalée dans la conduite, sont rassemblés pour former un seul bloc fonctionnel.

2. Appareil selon la revendication 1, caractérisé par le fait que, pour recevoir la bouteille utilisatrice (23) est prévue une cellule à bouteilles (26, 29, 30) verrouillable.

3. Appareil selon la revendication 1 ou 2, caractérisé par le fait qu'il est prévu une pièce enveloppe (30) par laquelle la cellule à bouteilles (26, 29, 30) est totalement isolée de l'extérieur pendant le remplissage.

4. Appareil selon l'une des revendications 1 à 3, caractérisé par le fait que la cellule à bouteilles (26, 29, 30) comporte un mécanisme de verrouillage (31) qui ne libère la cellule pour remplissage que lorsqu'a été introduite une bouteille vide préscrite.

Fig.1

Fig. 2

# Fig. 3

Fig.4

Fig.5